# EUROPÄISCHE PATENTSCHRIFT

(11) **EP 3 687 714 B1**
(45) Veröffentlichungstag und Bekanntmachung des Hinweises auf die Patenterteilung: **20.10.2021**
(21) Anmeldenummer: 18755448.0
(22) Anmeldetag: 14.08.2018
(51) Int. Cl.: B22D 19/00

(54) **GUSSBAUTEIL MIT EINGEGOSSENEM ROHR UND VERFAHREN ZUR HERSTELLUNG**
CAST COMPONENT HAVING A CAST-IN PIPE AND PRODUCTION METHOD
PIÈCE COULÉE DANS LAQUELLE EST COULÉ UN TUBE ET PROCÉDÉ DE FABRICATION

(30) Priorität: 29.09.2017 DE 102017217387
(43) Veröffentlichungstag der Anmeldung: 05.08.2020
(73) Patentinhaber: ZF Friedrichshafen AG, 88046 Friedrichshafen (DE)
(72) Erfinder: GÖBEL, Jan, 88142 Wasserburg (DE)
(86) Internationale Anmeldenummer: PCT/EP2018/071962
(87) Internationale Veröffentlichungsnummer: WO 2019/063184

(56) Entgegenhaltungen:
- CH-A- 473 630
- DE-A1-102009 002 057
- DE-T2- 69 626 328

## Beschreibung

Die Erfindung betrifft ein Gussbauteil mit wenigstens einem eingegossenen Rohr, welches von einem Medium durchströmbar ist. Die Erfindung betrifft ferner ein Verfahren zur Herstellung dieses Gussbauteils.

Die DE 10 2012 223 156 A1 beschreibt ein Gehäuse (Abgasventilgehäuse), das mindestens einen Heiz- oder Kühlkanal aufweist, der ein vom Gehäuse umschlossenes Rohr ist. Die Enden des Rohres sind zum Anschluss einer Leitung ausgebildet. Das Gehäuse besteht aus Aluminium-Druckguss und das Rohr aus Aluminium oder Kupfer. Zur Herstellung des Gehäuses wird das vorgeformte Rohr nach Art eines Kerns in eine Gussform für das Gehäuse eingelegt und anschließend beim Gießen des Gehäuses umgossen.

Die DE 10 2009 002 057 A1 offenbart ein Druckgussteil aus einer AluminiumDruckgusslegierung mir einem eingegossenen Stahlrohr. Rohrenden des Stahlrohrs weisen zur Gusshaut des Gussteils einen Abstand auf in dem Sinne, dass sie innerhalb des Gussteils liegen. Damit die Rohrenden dennoch von außen zugänglich sind, werden sie während des Gießvorgangs mit Verschlusskappen verschlossen, wobei die Verschlusskappen einerseits die Rohrenden gegen die Schmelze abdichten und andererseits zur Halterung des Rohrs in der Gussform dienen. Da die Verschlusskappen aus dem gleichen Material wie die Schmelze bestehen, werden sie während des Gießvorgangs angeschmolzen und gehen eine stoffliche Verbindung mit der Schmelze ein. Bei einer anschließenden spanenden Bearbeitung des Gussrohlings werden die über die Gusshaut vorstehenden Enden der Verschlusskappen entfernt, sodass von außen eine Verbindung ins Innere des Rohres besteht.

Die DE 696 26 328 T2 beschreibt ebenfalls ein in ein Druckgussteil eingegossenes Rohr mit zerspanbaren Endstutzen. Das Druckgussteil und die Endstutzen können aus demselben Material bestehen. Die Endstutzen verschließen das Rohr während des Gießvorgangs gegen eindringende Schmelze und erlauben eine Positionierung des Rohrs in der Gussform.

Aus der CH 473 630 A ist ein gegossener metallischer Körper mit einem eingegossenen Stahlrohr und nach außen vorstehenden Rohranschlussstutzen bekannt. Der Körper kann beispielsweise aus Gusseisen hergestellt sein und für einen Wärmespeicher-Heizkessel verwendet werden. Durch die häufigen Temperaturunterschiede und die unterschiedlichen Wärmeausdehnungen der verschiedenen Metalle können im Stahlrohr auf Dauer kleine Risse entstehen, sodass das Stahlrohr mit der Zeit undicht wird. Zur Vermeidung dieses Nachteils schlägt die CH 473 630 A vor, an den Rohrenden Rohranschlussstutzen vorzusehen, welche sich an ihren Außenflächen zu ihren freien Enden hin trichterförmig verjüngen. Dadurch strömt das in die Gussform einströmende Gusseisen während des Gussvorgangs gegen die trichterförmige Erweiterung und gewährleistet ein völlig dichtes Einschweißen des Anschlussstutzens.

Zwischen dem eingegossenen Rohr und dem umgebenden Gussmaterial können sich bereits beim Gießen oder auch erst im Laufe der späteren Benutzung Spalte bzw. Luftspalte ausbilden, die u. a. auf eine ungünstige stoffliche Bindung zwischen Guss- und Rohrmaterial und/oder auf unterschiedliche Wärmeausdehnungen zurückzuführen sind. Solche Spalte können sich entlang des Rohrs bis zur Bauteiloberfläche, wo sich häufig auch die Anschlüsse bzw. Rohranschlüsse befinden, ausbreiten. An den Rohranschlüssen kann dann das Medium, welches durch das Rohr geführt werden soll, unerwünscht in solche Spalte gelangen und woanders wieder austreten.

Mit der Erfindung soll wenigstens ein mit dem Stand der Technik einhergehender Nachteil vermieden oder zumindest verringert werden.

Dies gelingt mit den Erfindungsgegenständen der unabhängigen Patentansprüche. Bevorzugte Weiterbildungen und Ausgestaltungen der Erfindung sind in den abhängigen Ansprüchen dargestellt.

Das erfindungsgemäße metallische Gussbauteil hat einen durch Gießen erzeugten metallischen Gusskörper (Korpus) und wenigstens ein im Gusskörper eingegossenes Rohr, welches von einem Medium durchströmbar ist, wobei das Rohr an wenigstens einem seiner Rohrenden einen an oder in der Gusskörperoberfläche ausgebildeten Rohranschluss aufweist. Ferner ist vorgesehen, dass das Rohr zumindest an diesem Rohrende auch eine das Rohrende umschließende Buchse aufweist, die (zumindest teilweise) im Gusskörper, insbesondere in der Gusskörperoberfläche, eingebettet ist und mit der eine Abdichtung zwischen dem betreffenden Rohrende und dem Gusskörper erzielt bzw. bewirkt wird.

Das Rohr ist insbesondere ein Metallrohr, welches aus einer Aluminiumlegierung oder aus einer Stahllegierung gebildet sein kann. Das Rohr kann auch eine Beschichtung (z. B. eine Verzinkung) oder Ummantelung aufweisen.

Die Buchse ist eine Metallbuchse, die insbesondere stoffschlüssig mit dem umgebenden Gussmaterial des Gusskörpers verbunden ist. Das Gussmaterial ist eine Aluminiumlegierung, d. h. der Gusskörper ist aus einer Aluminiumgusslegierung bzw. Aluminiumdruckgusslegierung gebildet. Die Metallbuchse ist aus einer Zinklegierung gebildet. Beim Druckgießen kann sich zwischen der Aluminiumlegierung des Gusskörpers und der Zinklegierung der einzubettenden Buchse eine stoffschlüssige Verbindung ausbilden.

Die Metallbuchse, bzw. Zinkbuchse, kann als separate Buchse ausgebildet und am betreffenden Rohrende befestigt sein. Die Metallbuchse ist insbesondere ein durch spanende Bearbeitung hergestelltes Bauteil, insbesondere ein Drehteil. Die Metallbuchse kann mit dem betreffenden Rohrende verlötet, verschweißt und/oder verpresst sein. Die Metallbuchse kann aber durch Materialauftrag auf das betreffende Rohrende, bspw. durch Auftragsschweißen, Plasmaspritzen oder dergleichen, gebildet sein.

Mithilfe der am Rohrende befestigten und im Gusskörper bzw. der Gusskörperoberfläche eingebetteten Buchse gelingt eine Spaltabdichtung am Rohranschluss. Zum einen ist die (innere) Verbindung zwischen der Buchse und dem Rohrende dicht. Zum anderen ist die Buchse derart in das metallische Gussmaterial eingebettet, dass auch diese (äußere) Verbindung dicht ist. Insbesondere besteht zwischen der eingebetteten Buchse und dem umgebenden Gussmaterial eine mikroformschlüssige und/oder stoffschlüssige Verbindung. Die Erfindung versucht also nicht durch Optimierung der Verbindung zwischen Gussmaterial und Rohr eine Spaltbildung zu verhindern, sondern dichtet mithilfe einer Buchse etwaige Spalte zwischen Gussmaterial und Rohr an der Gusskörperoberfläche ab. Dadurch kann am Anschluss des Rohrs das Medium, welches durch das Rohr geführt werden soll, weder zwischen Gussmaterial und Rohr eindringen noch herausgedrückt werden. Gegebenenfalls kann auch der Abdichtungsaufwand an den Rohranschlüssen verringert werden.

Die Metallbuchse kann eine radiale Dicke (Wanddicke) von 3 mm bis 10 mm und insbesondere von 4 mm bis 6 mm aufweisen, wobei die Buchse auch dünner oder dicker sein kann. Im Vergleich zur Rohrwanddicke ist die Buchse bevorzugt dickwandiger. Ferner kann die Metallbuchse eine axiale Länge von 5 mm bis 20 mm und bevorzugt von 10 mm bis 15 mm aufweisen.

Das erfindungsgemäße Verfahren zur Herstellung eines Gussbauteils, das wenigstens einen Gusskörper und wenigstens ein im Gusskörper eingegossenes Rohr, welches von einem Medium durchströmbar ist, aufweist, umfasst die Schritte:
- Bereitstellen des Rohrs, das insbesondere ein Metallrohr ist;
- Aufbringen wenigstens einer Buchse an wenigstens einem der Rohrenden des Rohrs, insbesondere durch Auflöten, Aufschweißen und/oder Aufpressen einer Metallbuchse oder durch direkten Materialauftrag auf das Rohrende;
- Einlegen des Rohrs in eine Gussform, insbesondere Druckgussform, und Gießen, insbesondere Druckgießen, des Gussbauteils, wobei das Rohr mit Metallschmelze umgossen und dabei auch die Buchse in den erzeugten Gusskörper, insbesondere in die Gusskörperoberfläche, eingebettet wird;
- Entformen des Gussbauteils, nachdem die Metallschmelze erstarrt ist;
- Erzeugen wenigstens eines Rohranschlusses durch Nachbearbeitung des betreffenden Rohrendes und/oder der betreffenden Buchse, worunter insbesondere eine spanende Bearbeitung verstanden wird, bei der z. B. eine Anschlussfläche, wenigstens eine Befestigungsbohrung und/oder ein Anschlussgewinde ausgebildet werden kann.

Das Rohr kann vor oder nach dem Aufbringen der wenigstens einen Buchse umgeformt werden, so dass dieses 3-dimensional vorgeformt in die Gussform eingelegt wird. Bevorzugt ist das Rohr ein Metallrohr, welches im kalten Zustand (d. h. in etwa Raumtemperatur aufweisend) in die Gussform eingelegt und dann umgossen wird. Ein aufwändiges Vorwärmen ist also nicht vorgesehen.

Wenigstens eine Buchse kann mit einem Deckel ausgebildet sein, der das betreffende Rohrende beim Gießen verschließt bzw. abdichtet, wobei der Deckel dann bei der Nachbearbeitung entfernt wird.

Das erfindungsgemäß ausgebildete und/oder hergestellte Gussbauteil ist vorzugsweise ein Gehäusebauteil und insbesondere ein Getriebegehäusebauteil für ein Kraftfahrzeuggetriebe.

Die Erfindung wird nachfolgend mit Bezug auf die Zeichnung näher erläutert. Unabhängig von bestimmten Merkmalskombinationen können die in den Figuren der Zeichnung gezeigten und/oder nachfolgend erläuterten Merkmale allgemeine Merkmale der Erfindung sein und die Erfindung entsprechend weiterbilden.
Fig. 1 zeigt in einer schematischen Schnittdarstellung eine erste Ausführungsmöglichkeit der Erfindung.
Fig. 2 zeigt in einer schematischen Schnittdarstellung eine zweite Ausführungsmöglichkeit der Erfindung mit noch nicht fertiggestellten Rohranschlüssen.

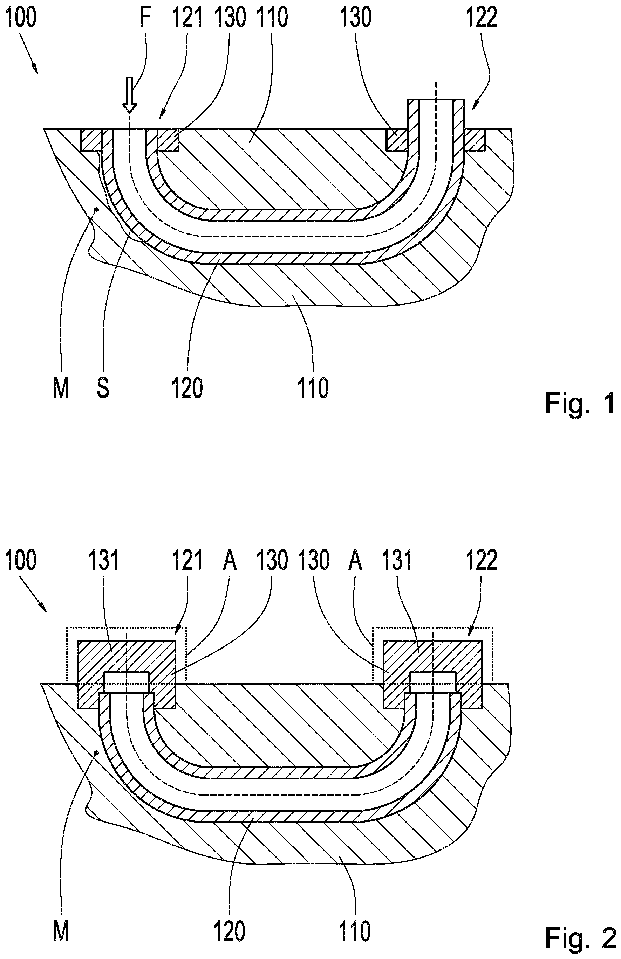

Fig. 1 zeigt einen Ausschnitt aus einem Druckgussbauteil 100, bei dem es sich um Getriebegehäusebauteil handelt. Das Gussbauteil 100 weist einen mittels Aluminium-Druckguss hergestellten Gusskörper 110 und ein darin eingegossenes Stahlrohr 120, das beispielhaft als U-Rohr ausgebildet ist, auf. Das Stahlrohr 120 hat bspw. einen Durchmesser von 8 mm bis 20 mm und eine Rohrwanddicke von ca. 2 mm. Beide Rohrenden des Stahlrohrs 120 sind an der Gusskörperoberfläche mit Rohranschlüssen 121 und 122 ausgebildet, an denen eine Zu- und Ablaufleitung für ein Medium F (bspw. Öl, Wasser oder Luft), welches durch das Rohr 120 geführt werden soll, angebunden werden können. Der linke Rohranschluss 121 ist als plane Anschlussfläche und der rechte Rohranschluss 122 ist als Stutzen ausgebildet. Das Gussbauteil bzw. Gehäusebauteil 100 wird, wie vorausgehend erläutert, durch Druckgießen hergestellt, wozu das Stahlrohr 120 in die Druckgussform eingelegt und umgossen wird. Die Rohranschlüsse 121 und 122 werden erst nach dem Gießen durch mechanische Nachbearbeitung fertiggestellt.

Wie obenstehend erläutert, können sich zwischen dem Gussmaterial M und dem Stahlrohr 120 Spalte bzw. Luftspalte S ausbilden. Ohne die erfindungsgemäße Maßnahme könnte an den Rohranschlüssen 121 und 122 das Medium F, welches durch das Rohr 120 geführt werden soll, unerwünscht in einen solchen Spalt S gelangen. Eine optimale Abdichtung an den Übergabestellen bzw. Rohranschlüssen 121 und 122 ist nicht immer möglich oder mit hohem Aufwand verbunden. Das in einen Spalt S gelangte Medium F kann dann woanders wieder austreten (bspw. durch Lunker und Porositäten hindurch zur Außenfläche gelangen), was als Gehäuseundichtheit oder Leckage wahrgenommen wird.

Um dies zu verhindern sind die Rohrenden des Stahlrohrs 120 jeweils mit einer aufgelöteten, aufgeschweißten und/oder aufgepressten Zinkbuchse 130 versehen, die die Rohrenden manschetten- bzw. ringartig umschließen und die an der Gusskörperoberfläche in das Gussmaterial M eingebettet sind. (Der Begriff Bauteil- oder Gusskörperoberfläche umfasst nicht nur die Außenfläche, sondern auch die nach innen angrenzende Zone bzw. Schicht, so dass bspw. auch von einer Außenschicht oder Randzone gesprochen werden kann.) Zwischen den Zinkbuchsen 130 und dem Aluminium-Gussmaterial M entsteht beim Druckgießen eine stoffliche Bindung (Stoffschluss). Ein direkter Stoffschluss zwischen dem Aluminium-Gussmaterial M und dem Stahlrohr 120 ist hingegen nicht oder nur mit großem Aufwand herstellbar. Die Verlötung, Verschweißung und/oder Verpressung der Zinkbuchsen 130 mit dem Stahlrohr 120 und die stoffliche Bindung der Zinkbuchsen 130 mit dem Gussmaterial M bilden eine zuverlässige Abdichtung, so dass das Medium F nicht in einen Spalt S gelangen kann.

Fig. 2 zeigt eine andere Ausführungsmöglichkeit. Dargestellt ist der Zustand nach dem Entformen des Gussbauteils bzw. Gehäusebauteils 100 aus der Druckgussform. Die Rohranschlüsse 121 und 122 sind noch nicht fertiggestellt. Die Zinkbuchsen 130 sind einstückig mit einem Deckel 131 ausgebildet, durch den die Rohrenden des Stahlrohrs 120 beim Druckgießen verschlossen bzw. abgedichtet sind. Die Zinkbuchsen 130 sind also zunächst als Kappen ausgebildet. Ein Rohrüberstand (siehe rechter Rohranschluss 122 in der Fig. 1), der auch zum Befestigen eines Verschlussstopfens oder dergleichen und/oder zur Fixierung des Stahlrohrs 120 in der Kavität der Druckgussform vorgesehen ist, kann entfallen. Damit kann gegebenenfalls auch das spätere Abtrennen dieses Rohrüberstands entfallen.

Bei der in Fig. 2 gezeigten Ausführungsmöglichkeit sind die Rohrenden des Stahlrohrs 120 sogar etwas zurückversetzt angeordnet, d. h. die Stirnflächen des Stahlrohrs 120 reichen nicht bis zur Außenfläche des Gusskörpers 110. Bei der mechanischen Nachbearbeitung der Rohranschlüsse 121 und 122, wobei die mit A bezeichneten Abschnitte bzw. Bereiche abgetrennt oder abgetragen werden, können somit ausschließlich für die Bearbeitung von Aluminium vorgesehene Werkzeuge verwendet werden.

### Bezugszeichen

- 100: Gussbauteil (Gehäusebauteil)
- 110: Gusskörper
- 120: Rohr
- 121: Rohranschluss
- 122: Rohranschluss
- 130: Buchse
- 131: Deckel
- A: Abschnitt
- F: Medium
- M: Gussmaterial
- S: Spalt

## Patentansprüche

1. Metallisches Gussbauteil (100) mit einem Gusskörper (110) und wenigstens einem im Gusskörper eingegossenen Rohr (120), welches von einem Medium (F) durchströmbar ist, wobei das Rohr (120) an wenigstens einem seiner Rohrenden einen an oder in der Gusskörperoberfläche ausgebildeten Rohranschluss (121, 122) aufweist, wobei das Rohr (120) an diesem Rohrende auch eine umschließende Buchse (130) aufweist, die im Gusskörper (110) eingebettet ist und eine Abdichtung zwischen dem Rohrende und dem Gusskörper (110) bewirkt und wobei die Buchse (130) eine Metallbuchse ist, die stoffschlüssig mit dem umgebenden Gussmaterial (M) des Gusskörpers (110) verbunden ist, wobei das Gussmaterial (M) eine Aluminiumlegierung ist, **dadurch gekennzeichnet, dass** die Metallbuchse (130) aus einer Zinklegierung gebildet ist.

2. Gussbauteil (100) nach Anspruch 1, **dadurch gekennzeichnet, dass** das Rohr (120) ein Metallrohr ist.

3. Gussbauteil (100) nach einem der vorhergehenden Ansprüche, **dadurch gekennzeichnet, dass** die Buchse (130) eine radiale Dicke von 3 mm bis 10 mm aufweist.

4. Gussbauteil (100) nach einem der vorhergehenden Ansprüche, **dadurch gekennzeichnet, dass** die Buchse (130) eine axiale Länge von 10 mm bis 15 mm aufweist.

5. Gussbauteil (100) nach einem der vorhergehenden Ansprüche, **dadurch gekennzeichnet, dass** dieses ein Gehäusebauteil und insbesondere ein Getriebegehäusebauteil ist.

6. Verfahren zur Herstellung eines Gussbauteils (100), das wenigstens einen Gusskörper (110) und wenigstens ein im Gusskörper eingegossenes Rohr (120), welches von einem Medium (F) durchströmbar ist, aufweist, umfassend die Schritte:
- Bereitstellen des Rohrs (120);
- Aufbringen wenigstens einer Buchse (130) an wenigstens einem der Rohrenden des Rohrs (120), wobei die Buchse (130) eine Metallbuchse ist;
- Einlegen des Rohrs (120) in eine Gussform und Gießen des Gussbauteils (100), wobei das Rohr (120) mit Metallschmelze umgossen und dabei auch die Buchse (130) in den erzeugten Gusskörper (110) eingebettet wird, so dass die Buchse (130) stoffschlüssig mit dem umgebenden Gussmaterial (M) des Gusskörpers (110) verbunden ist, wobei das Gussmaterial (M) eine Aluminiumlegierung ist;
- Entformen des Gussbauteils (100), nachdem die Metallschmelze erstarrt ist;
- Erzeugen wenigstens eines Rohranschlusses (121, 122) durch Nachbearbeitung des Rohrendes und/oder der Buchse (130),
**dadurch gekennzeichnet, dass** die Metallbuchse (130) aus einer Zinklegierung gebildet ist.

7. Verfahren nach Anspruch 6, **dadurch gekennzeichnet, dass** das Rohr (120) ein Metallrohr ist, welches im kalten Zustand in die Gussform eingelegt und umgossen wird.

8. Verfahren nach Anspruch 6 oder 7, **dadurch gekennzeichnet, dass** die Buchse (130) mit einem Deckel (131) ausgebildet ist, der das Rohrende beim Gießen verschließt, wobei der Deckel (131) bei der Nachbearbeitung entfernt wird.

## Claims

1. Metallic cast component (100) having a cast body (110) and at least one tube (120), which is integrally moulded in the cast body and can be flowed through by a medium (F), wherein the tube (120) at least at one of its tube ends has a tube connection (121, 122), which is formed on or in the cast-body surface, wherein the tube (120) at this tube end also has an enclosing bush (130), which is embedded in the cast body (110) and brings about a seal between the tube end and the cast body (110), and wherein the bush (130) is a metal bush, which is materially bonded to the surrounding cast material (M) of the cast body (110), wherein the cast material (M) is an aluminium alloy,
**characterized in that**
the metal bush (130) is formed from a zinc alloy.

2. Cast component (100) according to Claim 1, **characterized in that** the tube (120) is a metal tube.

3. Cast component (100) according to either of the preceding claims, **characterized in that** the bush (130) has a radial thickness of from 3 mm to 10 mm.

4. Cast component (100) according to one of the preceding claims, **characterized in that** the bush (130) has an axial length of from 10 mm to 15 mm.

5. Cast component (100) according to one of the preceding claims, **characterized in that** it is a housing component and in particular a transmission housing component.

6. Method for producing a cast component (100) which has at least one cast body (110) and at least one tube (120), which is integrally moulded in the cast body and can be flowed through by a medium (F), said method comprising the following steps:
- providing the tube (120);
- applying at least one bush (130) to at least one of the tube ends of the tube (120), wherein the bush (130) is a metal bush;
- inserting the tube (120) into a casting mould and casting the cast component (100), wherein the tube (120) is encapsulated by casting with metal melt and in the process the bush (130) is also embedded in the cast body (110) which has been created, with the result that the bush (130) is materially bonded to the surrounding cast material (M) of the cast body (110), wherein the cast material (M) is an aluminium alloy;
- removing the cast component (100) from the mould once the metal melt has solidified;
- creating at least one tube connection (121, 122) by reworking the tube end and/or the bush (130),
**characterized in that**
the metal bush (130) is formed from a zinc alloy.

7. Method according to Claim 6, **characterized in that** the tube (120) is a metal tube, which in the cold state is inserted into the casting mould and encapsulated by casting.

8. Method according to Claim 6 or 7, **characterized in that** the bush (130) is formed with a cover (131), which closes the tube end during the casting operation, wherein the cover (131) is removed during the reworking.

## Revendications

1. Pièce moulée métallique (100), comprenant un corps moulé (110) et au moins un tube (120) moulé dans le corps moulé et par lequel peut passer un fluide (F), le tube (120) présentant à au moins l'une de ses extrémités de tube un raccord de tube (121, 122) réalisé dans la surface de corps moulé, le tube (120) présentant à cette extrémité de tube aussi une douille périphérique (130) qui est incorporée dans le corps moulé (110) et provoque une étanchéité entre l'extrémité de tube et le corps moulé (110), et la douille (130) étant une douille métallique qui est reliée par liaison de matière au matériau de moulage environnant (M) du corps moulé (110), le matériau de moulage (M) étant un alliage d'aluminium,
**caractérisée en ce que** la douille métallique (130) est formée à partir d'un alliage de zinc.

2. Pièce moulée (100) selon la revendication 1, **caractérisée en ce que** le tube (120) est un tube métallique.

3. Pièce moulée (100) selon l'une quelconque des revendications précédentes, **caractérisée en ce que** la douille (130) présente une épaisseur radiale de 3 mm à 10 mm.

4. Pièce moulée (100) selon l'une quelconque des revendications précédentes, **caractérisée en ce que** la douille (130) présente une longueur axiale de 10 mm à 15 mm.

5. Pièce moulée (100) selon l'une quelconque des revendications précédentes, **caractérisée en ce qu'**il s'agit d'un composant d'un carter et en particulier d'un composant de carter de transmission.

6. Procédé de fabrication d'une pièce moulée (100) qui présente au moins un corps moulé (110) et au moins un tube (120) moulé dans le corps moulé et par lequel peut passer un fluide (F), comprenant les étapes consistant à :
- fournir le tube (120) ;
- appliquer au moins une douille (130) sur au moins l'une des extrémités de tube du tube (120), la douille (130) étant une douille métallique ;
- placer le tube (120) dans un moule et mouler la pièce moulée (100), le tube (120) étant entouré par le métal fondu et la douille (130) étant alors également incorporée dans le corps moulé (110) produit de sorte que la douille (130) est reliée par liaison de matière au matériau de moulage environnant (M) du corps moulé (110), le matériau de moulage (M) étant un alliage en aluminium ;
- démouler la pièce moulée (100) après solidification du métal fondu ;
- produire au moins un raccord de tube (121, 122) par un réusinage de l'extrémité de tube et/ou de la douille (130),
**caractérisé en ce que** la douille métallique (130) est formée à partir d'un alliage de zinc.

7. Procédé selon la revendication 6, **caractérisé en ce que** le tube (120) est un tube métallique qui est placé dans le moule à l'état froid et est moulé.

8. Procédé selon la revendication 6 ou 7, **caractérisé en ce que** la douille (130) est réalisée avec un couvercle (131) qui obture l'extrémité de tube pendant le moulage, le couvercle (131) étant retiré lors du réusinage.
